# EUROPEAN PATENT APPLICATION

(11) **EP 4 220 472 A1**
(43) Date of publication of application: **02.08.2023**
(21) Application number: 22175620.8
(22) Date of filing: 26.05.2022
(51) Int. Cl.: G06F 40/18, G06F 40/197

(54) **SYSTEM AND METHOD FOR REFERENCE VALIDATION OF SPREADSHEETS**

(30) Priority: 28.01.2022 US 202217588184
(71) Applicant: Intuit Inc., Mountain View, CA 94043 (US)
(72) Inventor: EFTEKHARI, Amir R., Mountain View, 94043 (US); PENTLAND, Ian Reed, Mountain View, 94043 (US); MEIKE, Roger C., Mountain View, 94043 (US)
(74) Representative: D Young & Co LLP

(57) **Abstract**

A method includes establishing a connection with a spreadsheet at a source location, receiving at least one selected field from an entry in the spreadsheet at the source location, and generating an assured reference record for the entry using at least one value in the at least one selected field. The assured reference record includes an assurance value and a reference to the entry at the source location. The method further includes storing, at a second location, the assured reference record in an assured reference file associated with the spreadsheet. The method further includes validating, after storing the assured reference record, the reference to the first entry in the spreadsheet at the source location using the first assurance value in the assured reference record.

## Description

### BACKGROUND

A spreadsheet is a common computer application for organizing, analyzing, and storing data in a table format. The spreadsheet program operates on data entered in cells that are typically arranged in rows and columns of the table. The cells may contain numeric data or text data. The cell also may contain the results of formulas (or algorithms) that automatically calculate and display a value based on the contents of other cells. The term "spreadsheet" may refer to both the computer application and an electronic document or file produced by the computer application. Although initially developed for accounting and bookkeeping applications, spreadsheets are now used extensively in any context where tabular lists are built, sorted, and shared. Importantly, spreadsheets are implemented in cloud-based systems that allow many users to access shared spreadsheet documents.

Many small and medium businesses use cloud-based spreadsheets that clients and service providers may access. A problem for cloud-based spreadsheets is that the owner or a user may inadvertently modify the contents of spreadsheets without being aware of it or providing notice to others. For example, a line in the spreadsheet may accidentally be deleted or a line may inadvertently be added after an improper cut-and-paste operation. A subsequent user or service trying to access a particular line in the spreadsheet will then access an incorrect entry.

### SUMMARY

In general, in one aspect, one or more embodiments relate to a method. The method includes establishing a connection with a spreadsheet at a source location, receiving at least one selected field from an entry in the spreadsheet at the source location, and generating an assured reference record for the entry using at least one value in the at least one selected field. The assured reference record includes an assurance value and a reference to the entry at the source location. The method further includes storing, at a second location, the assured reference record in an assured reference file associated with the spreadsheet. The method further includes validating, after storing the assured reference record, the reference to the first entry in the spreadsheet at the source location using the first assurance value in the assured reference record.

One or more embodiments also relate to a system. The system includes a data repository storing an assured reference file associated with a spreadsheet, and a processor in communication with the data repository and an assured reference generator. The assured reference generator, when executed by the processor, is configured to establish a connection with the spreadsheet at a source location, receive at least one selected field from an entry in the spreadsheet at the source location, generate an assured reference record for the entry using at least one value in the at least one selected field, the assured reference record including an assurance value and a reference to the first entry at the source location, and store, in the assured reference file in the data repository, the assured reference record. The system further includes an update engine, when executed by the processor, configured to validate, after storing the assured reference record, the reference to the first entry in the spreadsheet at the source location using the assurance value in the assured reference record.

One or more embodiments also relate to a method that includes providing, a server, access to a spreadsheet at a source location. The server transmits at least one selected field from an entry in the spreadsheet at the source location, generates an assured reference record for the entry using at least one value in the at least one selected field, the assured reference record comprising a assurance value and a reference to the first entry at the source location, and stores, at a second location, the assured reference record in an assured reference file associated with the spreadsheet. The method further includes updating, independently of the server, the spreadsheet, and initiating, on the server, an operation, wherein responsive to initiating the operation, the server validates, after storing the assured reference record, the reference to the entry in the spreadsheet at the source location using the assurance value in the assured reference record.

Other aspects of the disclosed system and method will be apparent from the following description and the appended claims.

### BRIEF DESCRIPTION OF DRAWINGS

Specific embodiments of the disclosed system and method will now be described in detail with reference to the accompanying figures. Like elements in the various figures are denoted by like reference numerals for consistency.
FIG. 1 illustrates an assured reference system in accordance with one or more embodiments of the present disclosure.
FIG. 2 illustrates a flowchart in accordance with one or more embodiments of the present disclosure.
FIG. 3 illustrates an example of an assured reference in accordance with one embodiment of the present disclosure.
FIG. 4 illustrates an example of an assured reference in accordance with another embodiment of the present disclosure.
FIG. 5 illustrates a flowchart in accordance with one or more embodiments of the present disclosure.
FIG. 6 illustrates a computing system in accordance with disclosed embodiments.
FIG. 7 illustrates a computing system in accordance with disclosed embodiments.

### DETAILED DESCRIPTION

In the following detailed description of embodiments of the disclosed system and method, numerous specific details are set forth to provide a more thorough understanding of the disclosed system and method. However, it will be apparent to one of ordinary skill in the art that the disclosed system and method may be practiced without these specific details. In other instances, well-known features have not been described in detail to avoid unnecessarily complicating the description.

In general, embodiments of the present disclosure relate to improved techniques for authorizing access to a spreadsheet. At the first instance of using a spreadsheet, the user specifies the link and authorizes access to the spreadsheet. Thereafter, the disclosed system and method treat the spreadsheet as a single source of structured data and allow searches, read operations, and write operations to maintain the data in the location where it resides. Client applications also treat the spreadsheet as structured data and may perform specified operations on the spreadsheet.

The disclosed system and method enable the user to manipulate the spreadsheet data from any point outside of the application. The disclosed system introduces optimized structures so that changes can be detected later and handled correctly. A user may intentionally or inadvertently change data in a spreadsheet without updating the server application. For example, a column may be shifted resulting in incorrect phone or email assignments for a given user. If such a situation occurs, the disclosed system and method will detect the changed data and will take corrective action.

One or more embodiments detect a changed entry in the spreadsheet using an assured reference record for the entry. The assured reference record includes an assurance value generated from values in a portion of the fields in an entry of the spreadsheet and a reference to the entry. For example, the assurance reference record may include a hashed and replicated subset of the values of the entry that enable the disclosed system and method to maintain enough information to uniquely determine if alterations have been made in the entry. The disclosed system and method then use the assured reference record to validate a spectrum of operations, including search, read, create, update, and delete. Advantageously, the disclosed system and method provide a continuous two-way connection that also allows changes from the destination to be mapped to the source.

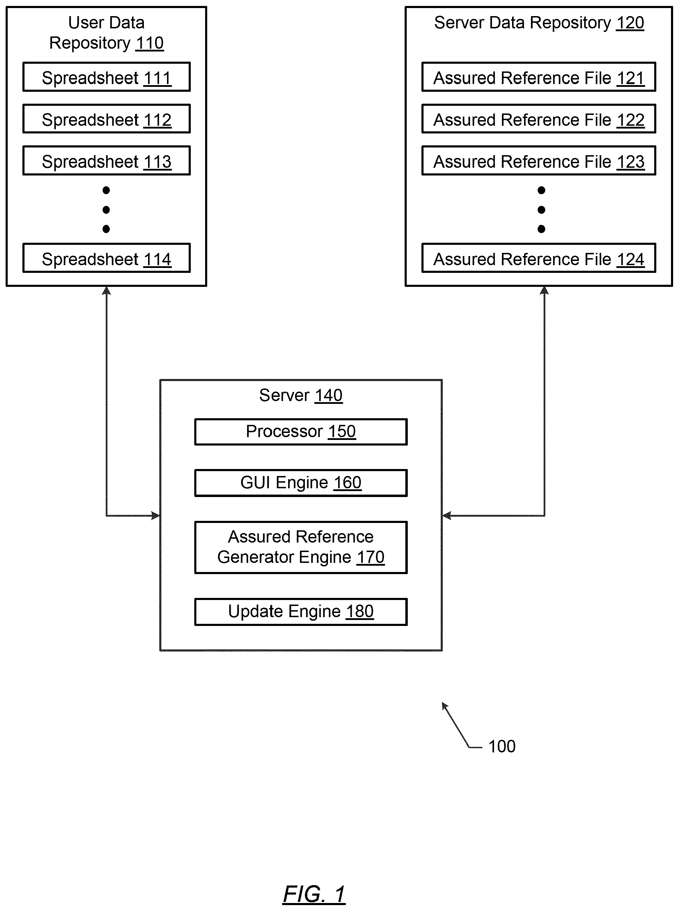

FIG. 1 illustrates an assured reference system (100) in accordance with one or more embodiments of the present disclosure. The assured reference system (100) shown in FIG. 1 may be implemented as hardware, software, or a combination thereof. The assured reference system (100) includes a user data repository (110), a server data repository (120), and a server (140) in accordance with one or more aspects of the disclosed system and method. In general, a data repository is one or more storage units (e.g., database, file system, or other storage structure) and/or hardware or virtual device(s) (e.g., computer readable storage medium, memory, cloud storage, storage server, etc.) for storing data. A data repository may include multiple homogeneous or heterogeneous storage units or devices. In an example embodiment, some or all of the user data repository (110), the server data repository (120), and the server (140) may be cloud-based components. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The user data repository (110) stores a plurality of files and other information in accordance with one or more embodiments. In particular, the user data repository (110) may store one or more spreadsheet files, such as example spreadsheet files (111, 112, 113, 114). Each spreadsheet file includes multiple entries. An entry may also be referred to as a record in the spreadsheet file. For the entries, the spreadsheet files has multiple fields. Each entry may have a value for at least a subset of fields.

In an example embodiment, a spreadsheet file (111-114) may include contact information for employees of a company or members of an organization. Each entry in the example is an individuals for which contact information is retained. The fields are the discrete pieces of contact information (e.g., name, home address, email address, etc.), and the values of the fields are the particular values for the particular individuals. The example of contact information is only for explanatory purposes. Other example embodiments may have a spreadsheet storing transactional information, a spreadsheet storing a log event, or another type of spreadsheet.

In at least some embodiments, a spreadsheet has at least two possible paths for updating the spreadsheet. For example, one path may be through a server software application, while another path may be directly via a client device. One or more embodiments are directed to allowing the server software application to detect when the spreadsheet is updated via another path.

The server data repository (120) stores multiple files and other information in accordance with one or more embodiments. In particular, the server data repository (120) stores or more assured reference files, such as example assured reference files (121, 122, 123, 124). In one or more embodiments, an individual assured reference file exists for each spreadsheet. In an example embodiment, each of the assured reference files (121-124) may include multiple assured reference records generated from entries in the corresponding spreadsheet file (111-114) according to the principles of the present disclosure.

In one or more embodiments, part or all of the entries has a corresponding assured reference record for the entry. The assured reference record includes a reference and an assurance value for a particular entry. The reference is an identifier of the location of the entry. For example, the reference may be the location of the entry with respect to the start of the spreadsheet. The assurance value is a value that may be used to validate the reference to the entry. For example, the assurance value may be a copy of, hashed version of, and/or encrypted version of the values of a selected subset of one or more of the fields of the entry. The subset of the fields that are selected are fields that are detected to be changed less than a threshold frequency. For example, in contact information, the selected subset may be name and email address.

By selecting fields that change less than a threshold frequency, one or more embodiments validate the reference to an entry while at the same time allowing for some external modification of the spreadsheet without issuing a validation error. For example, more frequently updated fields are not selected and may be updated without causing a validation error. Similarly, a user may add information into the entry without causing a validation error. Validation errors may occur when an entry moves or is deleted causing the reference to the entry to be invalid. From a use standpoint, one or more embodiments allow for multiple paths to modify the spreadsheet, while at the same time allowing for the server to validate whether the reference that the server has to a particular entry is still correct.

The server (140) includes a processor (150), a graphical user interface (GUI) engine (160), an assured reference generator engine (170), and an update engine (180). Each of the GUI engine (160), the assured reference generator engine (170), and the update engine (180) is executable by the processor (150). The GUI engine (160), when executed by the processor (150), provides the user with screen prompts on a display (not shown) on the user's computer or other device. The screen prompts enable the user to provide a link to the server (140), wherein the link provides the server (140) with read and write access to a designated spreadsheet, such as, the spreadsheet file (111). Once granted access, the server (140) can generate assured reference records from the contents of the designated spreadsheet file (111).

The assured reference generator engine (170), when executed by the processor (150), reads each entry in a selected one of the spreadsheet files (111-114) (hereafter, simply "spreadsheets (111-114)") and generates for each entry an assured reference record that is stored in a corresponding one of the assured reference files (121-124). For example, the assured reference generator (170) may read ten (10) entries from spreadsheet (111), generate ten (10) corresponding assured reference records, and store the ten generated assured reference records in the assured reference file (121).

The update engine (180), when executed by the processor (150), reads the current contents of a selected spreadsheet, such as spreadsheet (111), and generates a new assured reference record for one or more spreadsheet entries. The update engine (180) then compares the new assured reference record to the stored assured reference record to determine if the entry has been changed, thereby ensuring that the correct entry has been accessed. If no change has occurred, the update engine (180) may then perform an operation, such as updating the entry or using the entry to perform a task.

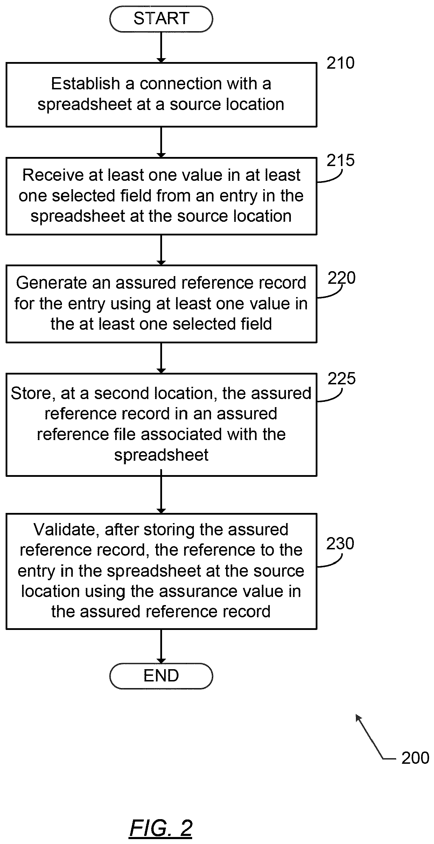

FIG. 2 illustrates a method in accordance with one or more embodiments of the present disclosure. In Block 210, a connection with a spreadsheet at a source location is established. In one or more embodiments, the spreadsheet is maintained at the source location. Thus, end users may continue to access the spreadsheet. To establish a connection, a user or separate application may provide a link to the spreadsheet and grant read and write access.

In Block 215, at least one selected field from an entry in the spreadsheet at the source location is received. The assured reference application may select a subset of fields of the spreadsheet. The selected subset may be the same across the entries of the spreadsheet.

In general, the selected fields have values that do not change or change only infrequently. Further, the selected fields have values that either alone or together are unique or uncommon. For example, if a spreadsheet has a list of contact information for a company, the values in each entry (or row) that are relatively constant are the contact's first name and last name, e-mail address, home address, mobile phone, and the like. By using values that are relatively constant and are unlikely repeated in other contacts, the assured reference application can generate assured reference records that are unlikely to be the same for different entries in a spreadsheet. Thus, if an entry moves, the detection of the move is possible. However, if an entry is merely updated, then the entry may not cause the invalidation error.

Thus, the assured reference application retrieves the values from the subset of fields from the spreadsheet at the source location.

In Block 220, the assured reference application generates an assured reference record for the entry in the spreadsheet. Generating the assured reference record includes identifying the location of the entry, generating a reference to the entry, and generating an assurance value for the entry from the values. The assurance value may be generated by generating a hash of or encrypting the at least one value in the at least one selected field. As another example, the assurance value may be generated by maintaining a direct copy of the at least one value. The various techniques for generating an assurance value may be combined or changed without departing from the scope of the disclosure.

At Block 225, at a second location, the assurance reference record is stored in an assured reference file associated with the spreadsheet. The update engine stores the generated assured reference records in a corresponding assured reference file. The process of Blocks 210-225 may be repeated for each spreadsheet and each entry in the respective spreadsheets.

At Block 230, after storing the assured reference record, the reference to the entry in the spreadsheet at the source location is validated using the assurance value in the assured reference record. In one or more embodiments, the reference is used to find the entry by the reference identifying the location of the entry. An assurance value is generated from the values in the entry at the location specified by the reference. If the newly generated assurance value matches the stored assurance value, then the reference to the entry is deemed valid. If the newly generated assurance value is different, than further operations may be used to determine whether the reference is invalid or if the subset of values have changed.

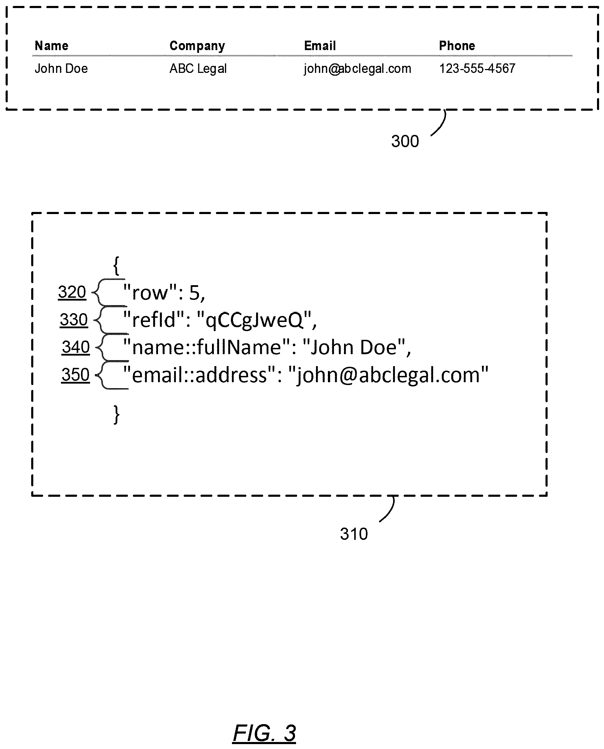

FIG. 3 illustrates an example of an assured reference record (310) in accordance with one embodiment of the present disclosure. In the example, the entry of a spreadsheet contains the contact information (300) for "John Doe", including the email address and phone number for John Doe. The processor (150) receives the contact information (300) and executes the assured reference generator engine (170) to generate the assured reference record (310). The assured reference record (310) includes the reference (i.e., row number 5 in the example) (320) of the entry, and an assurance value (i.e., reference ID ("refid") value "qCCgJweQ") (330) for the contact information. The assured reference record (310) further includes alphanumeric characters in plain text format for the key value ("John Doe") (340) from the "Name" column of the entry and the key value ("john@abclegal.com") (350) from the "Email" column of the entry.

The information in these selected values of the spreadsheet is highly unlikely to change and will be dissimilar to the values in any other entry of the spreadsheet. The generated assured reference record (310) will therefore be highly unlikely to be the same as the assured reference record of another entry in the spreadsheet. In an alternate embodiment, assured reference generator engine (170) may create an assured reference record (310) that includes encrypted text for the key values in the "Name" and "Email" columns instead of plain text.

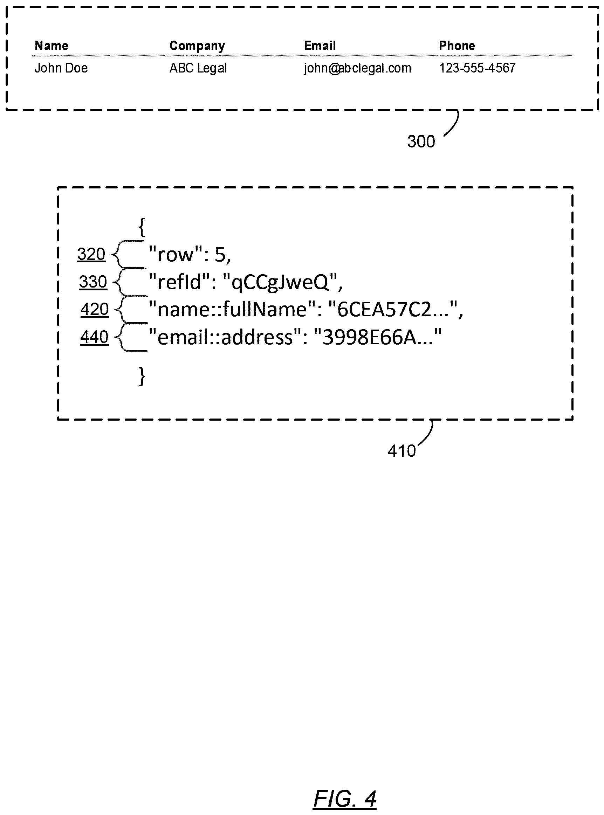

FIG. 4 illustrates an example of the assured reference record (410) in accordance with another embodiment of the present disclosure. As in FIG. 3, the processor (150) receives the contact information (300) and executes the assured reference generator engine (170) to generate the assured reference record (410). Unlike the example in FIG. 3, however, the assured reference generator engine (170) generates in FIG. 4 a first hash value ("6CEA57C2") (420) for the key value ("John Doe") in the "Name" column and generates a second hash value ("3998E66A") (440) for the key value ("john@abclegal.com") in the "Email" column.

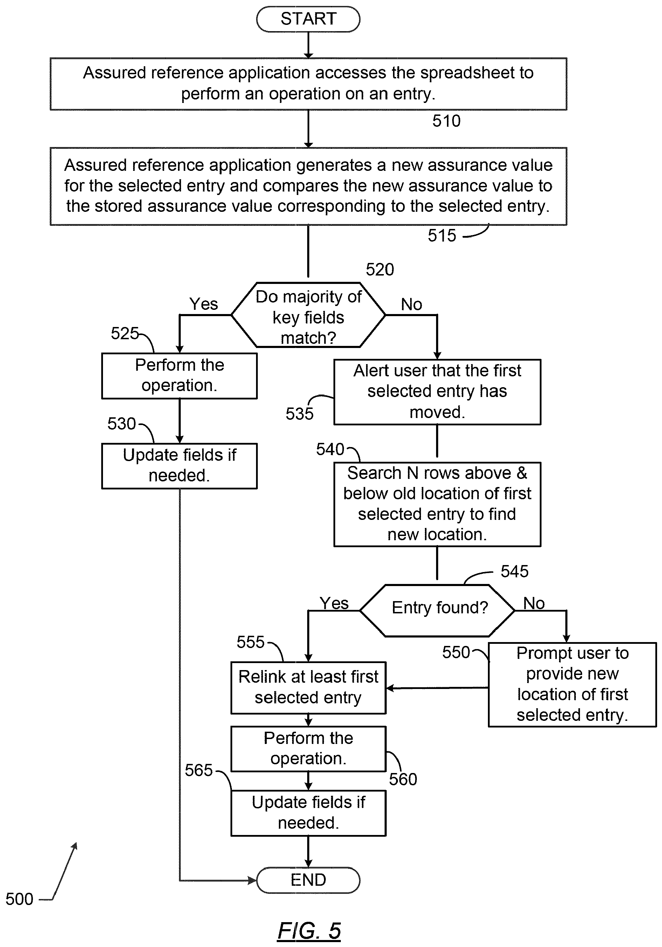

FIG. 5 illustrates a method in accordance with one or more embodiments of the present disclosure. The operations of FIG. 5 are triggered by the initiation of an operation on a server software application in one or more embodiments. In Block 510, the assured reference application accesses a spreadsheet to perform an operation on an entry of a spreadsheet. The assured reference application obtains an entry at a referenced location. The referenced location is the location specified by the reference in the assured reference record. In Block 515, the assured reference application generates a new assurance value for the obtained entry and compares the new assurance value to the stored assured assurance value in assured reference file the corresponds to the selected entry.

In Block 520, the assured reference application determines if the assurance values match or a majority of key fields that are stored in the assurance reference record matches the corresponding values in the referenced entry at the source location. If either is true, then in Block 525, the assured reference application performs the operation. In Block 530, the assured reference application updates selected fields in the entry, if needed. Updating the selected fields may also include generating and storing a new assured reference record for the entry.

Returning to Block 520, if both the assurance values do not match or a majority of key fields that are stored in the assurance reference record do not match the corresponding values in the referenced entry at the source location, then in Block 535, the assured reference application alerts the user that the first selected entry has moved. In Block 540, the assured reference application searches neighboring N entries that are adjacent to the referenced location of the entry to find a possible new location of the entry. For example, the neighboring entries may be directly adjacent or N rows above or below the referenced location.

In Block 545, the assured reference application determines if the search found the entry. The search is determined to have found the entry if either condition of Block 520 is satisfied. If in Block 545, the assured reference application the entry is found, then in Block 555, at least the entry is relinked to the assured reference record and in block 560 the operation is performed. Relinking updates the reference to store the new location of the referenced entry. In Block 565, the assured reference application updates other fields of the entry and the assured reference record, if needed.

If the entry is not found in Block 545, the assured reference application in Block 550 prompts the user to provide the new location of the first selected entry. In Block 555, the assured reference application then relinks at least the first selected entry to the assured reference record and in Block 560 performs the operation. In Block 565, the assured reference application updates fields in the entry, if needed.

Embodiments of the disclosed system and method may be implemented on a computing system. Any combination of mobile, desktop, server, router, switch, embedded device, or other types of hardware may be used.

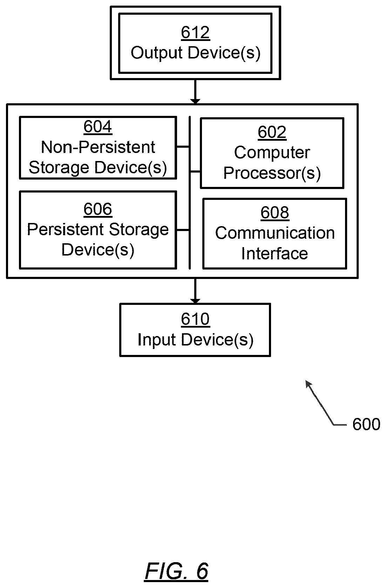

For example, as shown in FIG. 6, the computing system (600) may include one or more computer processors (602), non-persistent storage (604) (e.g., volatile memory, such as random access memory (RAM), cache memory), persistent storage (606) (e.g., a hard disk, an optical drive such as a compact disk (CD) drive or digital versatile disk (DVD) drive, a flash memory, etc.), a communication interface (608) (e.g., Bluetooth interface, infrared interface, network interface, optical interface, etc.), and numerous other elements and functionalities.

The computer processor(s) (602) may be an integrated circuit for processing instructions. For example, the computer processor(s) may be one or more cores or micro-cores of a processor. The computing system (600) may also include one or more input devices (610), such as a touchscreen, keyboard, mouse, microphone, touchpad, electronic pen, or any other type of input device.

The communication interface (608) may include an integrated circuit for connecting the computing system (600) to a network (not shown) (e.g., a local area network (LAN), a wide area network (WAN) such as the Internet, mobile network, or any other type of network) and/or to another device, such as another computing device.

Further, the computing system (600) may include one or more output devices (808), such as a screen (e.g., a liquid crystal display (LCD), a plasma display, touchscreen, cathode ray tube (CRT) monitor, projector, or other display device), a printer, external storage, or any other output device. One or more of the output devices may be the same or different from the input device(s). The input and output device(s) may be locally or remotely connected to the computer processor(s) (602), non-persistent storage (604), and persistent storage (606). Many different types of computing systems exist, and the aforementioned input and output device(s) may take other forms.

Software instructions in the form of computer readable program code to perform embodiments of the disclosed system and method may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments of the disclosed system and method. Alternatively or additionally, the software instructions may be on transient media such as carrier signals and transmission media.

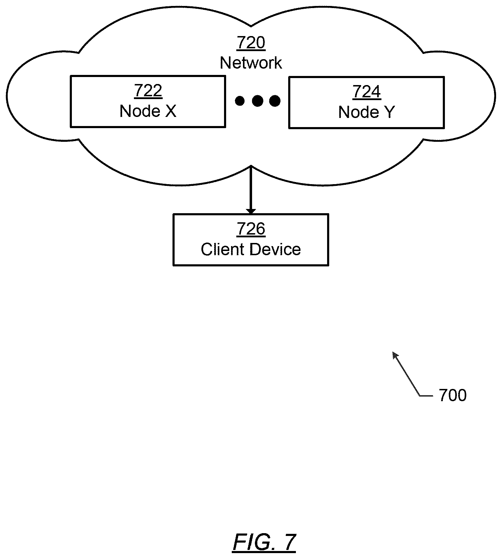

The computing system (600) in FIG. 6 may be connected to or be a part of a network. For example, as shown in FIG. 7, the network (720) may include multiple nodes (e.g., node X (722), node Y (724)). Each node may correspond to a computing system, such as the computing system shown in FIG. 6, or a group of nodes combined may correspond to the computing system shown in FIG. 6. By way of an example, embodiments of the disclosed system and method may be implemented on a node of a distributed system that is connected to other nodes. By way of another example, embodiments of the disclosed system and method may be implemented on a distributed computing system having multiple nodes, where each portion of the disclosed system and method may be located on a different node within the distributed computing system. Further, one or more elements of the computing system (600) may be located at a remote location and connected to the other elements over a network.

Although not shown in FIG. 7, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (e.g., node X (722), node Y (724)) in the network (720) may be configured to provide services for a client device (726). For example, the nodes may be part of a cloud computing system. The nodes may include functionality to receive requests from the client device (726) and transmit responses to the client device (726). The client device (726) may be a computing system, such as the computing system shown in FIG. 6. Further, the client device (726) may include and/or perform all or a portion of one or more embodiments of the disclosed system and method.

The computing system or group of computing systems described in FIG. 6 and FIG. 7 may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file. Further details pertaining to a couple of these non-limiting examples are provided below.

Based on the client-server networking model, sockets may serve as interfaces or communication channel endpoints enabling bidirectional data transfer between processes on the same device. Foremost, following the client-server networking model, a server process (e.g., a process that provides data) may create a first socket object. Next, the server process binds the first socket object, thereby associating the first socket object with a unique name and/or address. After creating and binding the first socket object, the server process then waits and listens for incoming connection requests from one or more client processes (e.g., processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (e.g., bytes).

Shared memory refers to the allocation of virtual memory space in order to substantiate a mechanism for which data may be communicated and/or accessed by multiple processes. In implementing shared memory, an initializing process first creates a shareable segment in persistent or non-persistent storage. Post creation, the initializing process then mounts the shareable segment, subsequently mapping the shareable segment into the address space associated with the initializing process. Following the mounting, the initializing process proceeds to identify and grant access permission to one or more authorized processes that may also write and read data to and from the shareable segment. Changes made to the data in the shareable segment by one process may immediately affect other processes, which are also linked to the shareable segment. Further, when one of the authorized processes accesses the shareable segment, the shareable segment maps to the address space of that authorized process. Often, only one authorized process may mount the shareable segment, other than the initializing process, at any given time.

Other techniques may be used to share data, such as the various data described in the present application, between processes without departing from the scope of the disclosure. The processes may be part of the same or different application and may execute on the same or different computing system.

Rather than or in addition to sharing data between processes, the computing system performing one or more embodiments of the disclosed system and method may include functionality to receive data from a user. For example, in one or more embodiments, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the item may be obtained from persistent or non-persistent storage by the computer processor. Upon selection of the item by the user, the contents of the obtained data regarding the item may be displayed on the user device in response to the user's selection.

By way of another example, a request to obtain data regarding the item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the selected item and send the data to the device that initiated the request. Once the user device has received the data regarding the selected item, the contents of the received data regarding the item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments of the disclosed system and method, may extract one or more data items from the obtained data. For example, the extraction may be performed as follows by the computing system in FIG. 6. First, the organizing pattern (e.g., grammar, schema, layout) of the data is determined, which may be based on one or more of the following: position (e.g., bit or column position, Nth token in a data stream, etc.), attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

The computing system in FIG. 6 may implement and/or be connected to a data repository. For example, one type of data repository is a database. A database is a collection of information configured for ease of data retrieval, modification, re-organization, and deletion. Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, etc. Moreover, the statement may include parameters that specify data, or data container (database, table, record, column, view, etc.), identifier(s), conditions (comparison operators), functions (e.g., join, full join, count, average, etc.), sort (e.g., ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system of FIG. 6 may include functionality to present raw and/or processed data, such as results of comparisons and other processing. For example, presenting data may be accomplished through various presenting methods. Specifically, data may be presented through a user interface provided by a computing device. The user interface may include a GUI that displays information on a display device, such as a computer monitor or a touchscreen on a handheld computer device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

For example, a GUI may first obtain a notification from a software application requesting that a particular data object be presented within the GUI. Next, the GUI may determine a data object type associated with the data object, e.g., by obtaining data from a data attribute within the data object that identifies the data object type. Then, the GUI may determine any rules designated for displaying that data object type, e.g., rules specified by a software framework for a data object class or according to any local parameters defined by the GUI for presenting that data object type. Finally, the GUI may obtain data values from the data object and render a visual representation of the data values within a display device according to the designated rules for that data object type.

The above description of functions presents only a few examples of functions performed by the computing system of FIG. 6 and the nodes and/ or client device in FIG. 7. Other functions may be performed using one or more embodiments of the disclosed system and method.

Throughout the application, ordinal numbers (*e.g*., first, second, third, etc.) may be used as an adjective for an element (*i.e.,* any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

While the disclosed system and method have been described with respect to a limited number of embodiments, those skilled in the art, having benefit of this disclosure, will appreciate that other embodiments can be devised which do not depart from the scope of the system and method as disclosed herein. Accordingly, the scope of the invention should be limited only by the attached claims.

The invention is defined in the appended claims.

Further examples of feature combinations taught by the present disclosure are set out in the following numbered clauses:
1. A method comprising:
   establishing a connection with a spreadsheet at a source location;
   receiving at least one value from at least one selected field from a first entry in the spreadsheet at the source location;
   generating an assured reference record for the first entry using at least one value in the at least one selected field, the assured reference record comprising a first assurance value and a reference to the first entry at the source location;
   storing, at a second location, the assured reference record in an assured reference file associated with the spreadsheet; and
   validating, after storing the assured reference record, the reference to the first entry in the spreadsheet at the source location using the first assurance value in the assured reference record.
2. The method of clause 1, wherein validating the reference comprises:
   retrieving, responsive to an initiation of an operation on the first entry and using the reference, a second entry from the spreadsheet at the source location;
   generating, from the second entry, a second assurance value using the at least one selected field; and
   determining that the first entry and the second entry are the same based on a match between the first assurance value and the second assurance value.
3. The method of clause 2, further comprising performing the operation on the first entry based on the first entry and the second entry being the same.
4. The method of clause 1, wherein validating the reference comprises:
   retrieving, responsive to an initiation of an operation on the first entry and using the reference, a second entry from the spreadsheet at the source location;
   generating, from the second entry, a second assurance value using the at least one selected field; and
   determining that the first entry and the second entry are not the same based on the first assurance value being different than the second assurance value, and
   wherein the method further comprises issuing, responsive to determining that the first entry and the second entry are not the same, a notification that the first entry has moved in the spreadsheet.
5. The method of clause 1, wherein validating the reference comprises:
   retrieving, responsive to an initiation of an operation on the first entry and using the reference, a second entry from the spreadsheet at the source location,
   generating, from the second entry, a second assurance value using the at least one selected field, and
   determining that the first entry and the second entry are not the same based on the first assurance value being different than the second assurance value, and
   wherein the method further comprises searching, responsive to determining that the first entry and the second entry are not the same, a neighboring entry in the spreadsheet at a neighboring location to an original location of the first entry to determine if the first entry has moved to the neighboring location.
6. The method of clause 5, further comprising updating the reference to the neighboring location.
7. The method of any preceding clause, further comprising:
   determining a frequency that the at least one value changes; and
   selecting the at least one selected field for the assured reference record based on the frequency.
8. The method of any preceding clause, wherein the first assurance value comprises a plain text value of alphanumeric characters in the at least one selected field.
9. The method of any preceding clause, wherein the first assurance value comprises an encrypted value of alphanumeric characters in the at least one selected field.
10. The method of any preceding clause, wherein the first assurance value comprises a hashed value of alphanumeric characters in the at least one selected field.
11. A system comprising:
   a data repository storing an assured reference file associated with a spreadsheet;
   a processor in communication with the data repository;
   an assured reference generator, when executed by the processor, configured to:
      establish a connection with the spreadsheet at a source location,
      receive at least one selected field from a first entry in the spreadsheet at the source location,
      generate an assured reference record for the first entry using at least one value in the at least one selected field, the assured reference record comprising a first assurance value and a reference to the first entry at the source location, and
      store, in the assured reference file in the data repository, the assured reference record; and an update engine, when executed by the processor, configured to:
         validate, after storing the assured reference record, the reference to the first entry in the spreadsheet at the source location using the first assurance value in the assured reference record.
12. The system of clause 11, wherein validating the reference to the first entry:
   retrieving, responsive to an initiation of an operation on the first entry and using the reference, a second entry from the spreadsheet at the source location,
   generating, from the second entry, a second assurance value using the at least one selected field, and
   determining that the first entry and the second entry are the same based on a match between the first assurance value and the second assurance value.
13. The system of clause 11, wherein validating the reference comprises:
   retrieving, responsive to an initiation of an operation on the first entry and using the reference, a second entry from the spreadsheet at the source location,
   generating, from the second entry, a second assurance value using the at least one selected field, and
   determining that the first entry and the second entry are not the same based on the first assurance value being different than the second assurance value,
   wherein the update engine is further configured to issue, responsive to determining that the first entry and the second entry are not the same, a notification that the first entry has moved in the spreadsheet.
14. The system of clause 11, wherein validating the reference comprises:
   retrieving, responsive to an initiation of an operation on the first entry and using the reference, a second entry from the spreadsheet at the source location,
   generating, from the second entry, a second assurance value using the at least one selected field, and
   determining that the first entry and the second entry are not the same based on the first assurance value being different than the second assurance value,
   wherein the update engine is further configured to search, responsive to determining that the first entry and the second entry are not the same, a neighboring entry in the spreadsheet at a neighboring location to an original location of the first entry to determine if the first entry has moved to the neighboring location.
15. The system of any of clauses 11 to 14, wherein the first assurance value comprises a plain text value of alphanumeric characters in the at least one selected field.
16. The system of any of clauses 11 to 15, wherein the first assurance value comprises an encrypted value of alphanumeric characters in the at least one selected field.
17. The system of any of clauses 11 to 16, wherein the first assurance value comprises a hashed value of alphanumeric characters in the at least one selected field.
18. A method comprising:
   providing, a server, access to a spreadsheet at a source location, wherein the server
      transmits at least one selected field from a first entry in the spreadsheet at the source location,
      generates an assured reference record for the first entry using at least one value in the at least one selected field, the assured reference record comprising a first assurance value and a reference to the first entry at the source location, and
      stores, at a second location, the assured reference record in an assured reference file associated with the spreadsheet;
   updating, independently of the server, the spreadsheet; and
   initiating, on the server, an operation, wherein responsive to initiating the operation, the server validates, after storing the assured reference record, the reference to the first entry in the spreadsheet at the source location using the first assurance value in the assured reference record.
19. The method of clause 18, wherein validating the reference comprises:
   retrieving, responsive to an initiation of an operation on the first entry and using the reference, a second entry from the spreadsheet at the source location;
   generating, from the second entry, a second assurance value using the at least one selected field;
   determining that the first entry and the second entry are not the same based on the first assurance value being different than the second assurance value,
   wherein the server further searches, responsive to determining that the first entry and the second entry are not the same, a neighboring entry in the spreadsheet at a neighboring location to an original location of the first entry to determine if the first entry has moved to the neighboring location.
20. The method of clause 19, wherein validating the reference comprises:
   retrieving, responsive to an initiation of an operation on the first entry and using the reference, a second entry from the spreadsheet at the source location;
   generating, from the second entry, a second assurance value using the at least one selected field; and
   determining that the first entry and the second entry are not the same based on the first assurance value being different than the second assurance value,
   wherein the method further includes receiving, responsive to determining that the first entry and the second entry are not the same, a notification that the first entry has moved in the spreadsheet.

## Claims

1. A method comprising:
establishing a connection with a spreadsheet at a source location;
receiving at least one value from at least one selected field from a first entry in the spreadsheet at the source location;
generating an assured reference record for the first entry using at least one value in the at least one selected field, the assured reference record comprising a first assurance value and a reference to the first entry at the source location;
storing, at a second location, the assured reference record in an assured reference file associated with the spreadsheet; and
validating, after storing the assured reference record, the reference to the first entry in the spreadsheet at the source location using the first assurance value in the assured reference record.

2. The method of claim 1, wherein validating the reference comprises:
retrieving, responsive to an initiation of an operation on the first entry and using the reference, a second entry from the spreadsheet at the source location;
generating, from the second entry, a second assurance value using the at least one selected field; and
determining that the first entry and the second entry are the same based on a match between the first assurance value and the second assurance value.

3. The method of claim 2, further comprising performing the operation on the first entry based on the first entry and the second entry being the same.

4. The method of claim 1, wherein validating the reference comprises:
retrieving, responsive to an initiation of an operation on the first entry and using the reference, a second entry from the spreadsheet at the source location;
generating, from the second entry, a second assurance value using the at least one selected field; and
determining that the first entry and the second entry are not the same based on the first assurance value being different than the second assurance value, and
wherein the method further comprises issuing, responsive to determining that the first entry and the second entry are not the same, a notification that the first entry has moved in the spreadsheet.

5. The method of claim 1, wherein validating the reference comprises:
retrieving, responsive to an initiation of an operation on the first entry and using the reference, a second entry from the spreadsheet at the source location,
generating, from the second entry, a second assurance value using the at least one selected field, and
determining that the first entry and the second entry are not the same based on the first assurance value being different than the second assurance value, and
wherein the method further comprises searching, responsive to determining that the first entry and the second entry are not the same, a neighboring entry in the spreadsheet at a neighboring location to an original location of the first entry to determine if the first entry has moved to the neighboring location.

6. The method of claim 5, further comprising updating the reference to the neighboring location.

7. The method of any preceding claim, further comprising:
determining a frequency that the at least one value changes; and
selecting the at least one selected field for the assured reference record based on the frequency.

8. The method of any preceding claim, wherein the first assurance value comprises a plain text value of alphanumeric characters in the at least one selected field.

9. The method of any preceding claim, wherein the first assurance value comprises an encrypted value of alphanumeric characters in the at least one selected field.

10. The method of any preceding claim, wherein the first assurance value comprises a hashed value of alphanumeric characters in the at least one selected field.

11. A system comprising:
a data repository storing an assured reference file associated with a spreadsheet;
a processor in communication with the data repository;
an assured reference generator, when executed by the processor, configured to:
establish a connection with the spreadsheet at a source location,
receive at least one selected field from a first entry in the spreadsheet at the source location,
generate an assured reference record for the first entry using at least one value in the at least one selected field, the assured reference record comprising a first assurance value and a reference to the first entry at the source location, and
store, in the assured reference file in the data repository, the assured reference record; and an update engine, when executed by the processor, configured to:
validate, after storing the assured reference record, the reference to the first entry in the spreadsheet at the source location using the first assurance value in the assured reference record.

12. The system of claim 11, wherein validating the reference to the first entry:
retrieving, responsive to an initiation of an operation on the first entry and using the reference, a second entry from the spreadsheet at the source location,
generating, from the second entry, a second assurance value using the at least one selected field, and
determining that the first entry and the second entry are the same based on a match between the first assurance value and the second assurance value.

13. The system of claim 11, wherein validating the reference comprises:
retrieving, responsive to an initiation of an operation on the first entry and using the reference, a second entry from the spreadsheet at the source location,
generating, from the second entry, a second assurance value using the at least one selected field, and
determining that the first entry and the second entry are not the same based on the first assurance value being different than the second assurance value, and
at least one of:
wherein the update engine is further configured to issue, responsive to determining that the first entry and the second entry are not the same, a notification that the first entry has moved in the spreadsheet; and,
wherein the update engine is further configured to search, responsive to determining that the first entry and the second entry are not the same, a neighboring entry in the spreadsheet at a neighboring location to an original location of the first entry to determine if the first entry has moved to the neighboring location.

14. The system of any of claims 11 to 13, wherein the first assurance value comprises at least one of:
a plain text value of alphanumeric characters in the at least one selected field;
an encrypted value of alphanumeric characters in the at least one selected field; and,
a hashed value of alphanumeric characters in the at least one selected field.

15. A method comprising:
providing, a server, access to a spreadsheet at a source location, wherein the server
transmits at least one selected field from a first entry in the spreadsheet at the source location,
generates an assured reference record for the first entry using at least one value in the at least one selected field, the assured reference record comprising a first assurance value and a reference to the first entry at the source location, and
stores, at a second location, the assured reference record in an assured reference file associated with the spreadsheet;
updating, independently of the server, the spreadsheet; and
initiating, on the server, an operation, wherein responsive to initiating the operation, the server validates, after storing the assured reference record, the reference to the first entry in the spreadsheet at the source location using the first assurance value in the assured reference record.
